# EUROPEAN PATENT SPECIFICATION

(11) **EP 1 951 464 B1**
(45) Date of publication and mention of the grant of the patent: **24.06.2009**
(21) Application number: 05850968.8
(22) Date of filing: 29.11.2005
(51) Int. Cl.: B23D 57/00, B28D 1/08

(54) **MULTIPLE WIRE MACHINE FOR CUTTING STONE MATERIALS**
MASCHINE MIT MEHREREN DRÄHTEN ZUM SCHNEIDEN VON STEINMATERIALIEN
MACHINE A FILS MULTIPLES POUR COUPER DES MATERIAUX EN PIERRE

(43) Date of publication of application: 06.08.2008
(73) Proprietor: Pellegrini Meccanica S.p.A., 37135 Verona (IT)
(72) Inventor: PELLEGRINI, Marco Terzo, I-37031 Illasi (IT)
(74) Representative: Ponchiroli, Simone
(86) International application number: PCT/IT2005/000700
(87) International publication number: WO 2007/063559

(56) References cited:
- EP-A- 1 024 314
- EP-A- 1 598 161
- WO-A-95/03147
- DE-U1- 20 116 965
- FR-A- 1 291 784
- PATENT ABSTRACTS OF JAPAN vol. 013, no. 282 (M-843), 28 June 1989 (1989-06-28) -& JP 01 078802 A (DAIWA KIKAI SEISAKUSHO:KK), 24 March 1989 (1989-03-24)
- PATENT ABSTRACTS OF JAPAN vol. 013, no. 542 (M-901), 5 December 1989 (1989-12-05) -& JP 01 222903 A (OHBAYASHI CORP), 6 September 1989 (1989-09-06)

## Description

### Technical Field

The present invention relates to a multiple wire machine for cutting stone materials according to the preamble of claim 1, designed to obtain a plurality of slabs from blocks of materials such as marble, granite, etc.

Such a machine is known from EP 1 024 314.

### Background Art

Such machines generally comprises a plurality of cutting devices positioned side by side in parallel planes and each consisting of a cutting wire wound in a loop around at least two flywheels, at least one of the flywheels being motor-driven. The actual cutting operation is performed by causing relative motion between the block to be cut and the cutting wires.

Each cutting device also has a tensioning system which guarantees tensioning of the individual cutting wire during the entire cutting operation.

An example of a tensioning device, which allows independent tensioning of all of the individual cutting wires, is described in patent EP 1 024 314 by the same Applicant.

In said patent, wire tensioning is guaranteed by a hydraulic cylinder connected between the flywheel and a fixed part relative to the flywheel, and which is fed with pressurised oil so as to cause it to extend and consequently move the flywheel relative to the fixed part in a direction such that it causes an extension of the path of the cutting wire.

However, the multiple wire machines for cutting known today have several disadvantages.

During cutting operations the characteristics of the material cut (hardness) may vary considerably even in the same block.

When, during the reciprocal movement of the cutting device and the block, the hardness of the material increases, the sweepforward and therefore the tension to which the cutting wire is subjected increases and if the tension becomes excessive the wire may break.

In contrast, when the hardness of the material is reduced, the wire finds no obstacle to the cutting action (in particular the sweepforward is cancelled), therefore wire tensioning could be too low, the result being that the cut obtained is not smooth and precise enough.

In both cases, the problem which arises is linked to the fact that the flywheel used for tensioning guarantees the correct tensioning only for as long as it can move freely relative to the other flywheel. However, when the flywheel reaches the end of its stroke (on one side or the other) it cannot move any further in that direction. As a result, if, depending on the case in question, there is a further increase or reduction in the tensioning, the known tensioning means are not able to compensate for it.

### Disclosure of the Invention

In this situation, the technical need which forms the basis of the present invention is to provide a multiple wire machine for cutting stone materials which overcomes the above-mentioned disadvantages.

In particular, the technical need of the present invention is to provide a multiple wire machine for cutting stone materials which can prevent excessive tensioning of the cutting wires under any operating condition.

Another technical need of the present invention is to provide a multiple wire machine for cutting stone materials which prevents the cutting wires from breaking due to excessive tensioning.

Yet another technical need of the present invention is to provide a multiple wire machine for cutting stone materials which prevents excessive slackening of the cutting wires and which therefore guarantees a precise and smooth cut under any operating condition.

The technical need specified and the aims indicated are achieved by a multiple wire machine for cutting stone materials as defined in the appended claims.

### Brief Description of the Drawings

Further features and advantages of the present invention are more apparent in the detailed description below, with reference to a preferred, non-limiting embodiment of a multiple wire machine for cutting stone materials, illustrated in the accompanying drawings, in which:
Figure 1 is a front view with some transparent parts of a multiple wire machine for cutting stone materials in accordance with the present invention;

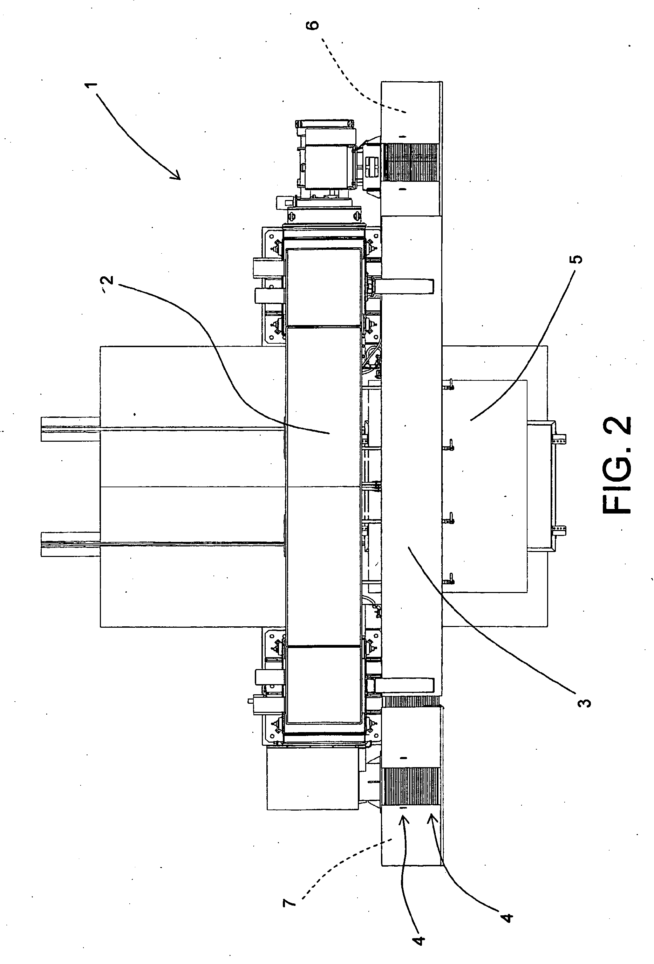

Figure 2 is a top view of the machine illustrated in Figure
Figure 3 is a top view of an enlarged detail of the machine illustrated in Figure 1;

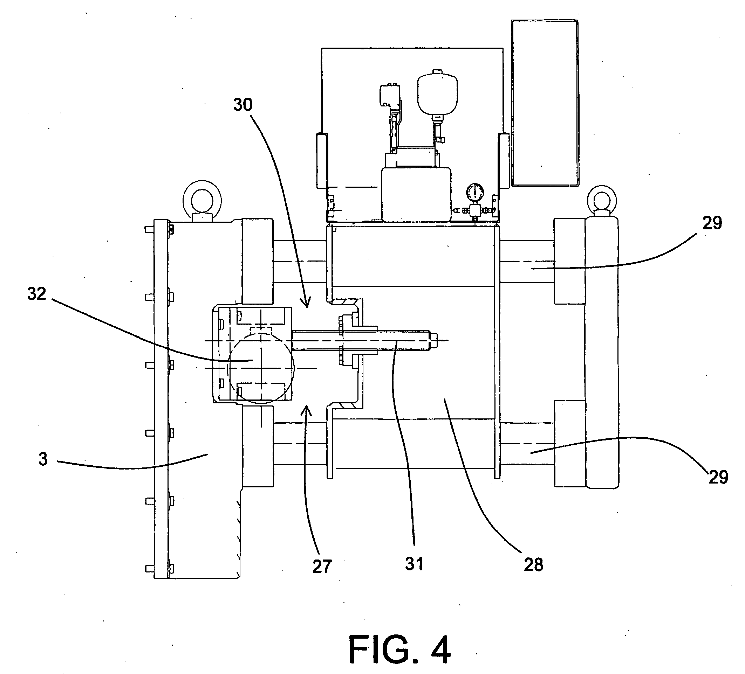

Figure 4 is a cross-section of the detail illustrated in Figure according to line IV - IV;
Figure 5 is a front view of a group of first flywheels 6 of the machine illustrated in Figure 1;
Figure 6 is a cross-section of the group of first flywheels 6 illustrated in Figure 5;
Figure 7 is an axonometric rear view of the group of first flywheels 6 illustrated in Figure 5;
Figure 8 is an axonometric front view of the group of first flywheels 6 illustrated in Figure 5;

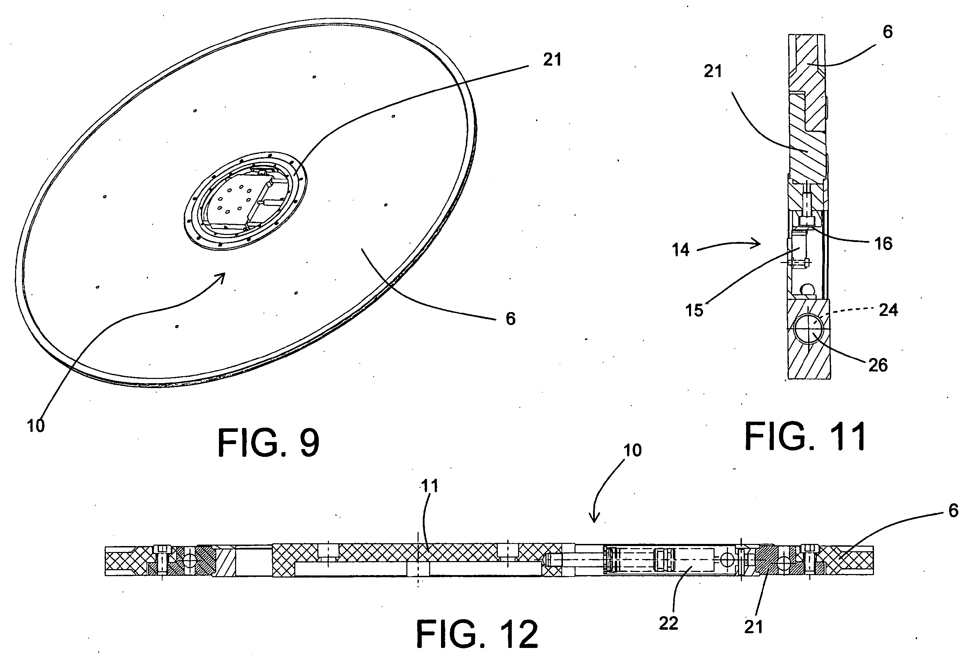

Figure 9 is an axonometric view of a first flywheel made in accordance with the present invention;
Figure 10 is a front view of the central part of the flywheel illustrated in Figure 9;
Figure 11 is a cross-section of the flywheel illustrated in Figure 10 according to line XI - XI;
Figure 12 is a cross-section of the flywheel illustrated in Figure 10 according to line XII - XII;
Figure 13 is a chart representing operation of the machine in accordance with the present invention;
Figures 14 to 17 illustrate other charts of further operating conditions of the machine in accordance with the present invention.

### Detailed Description of the Preferred Embodiments of the Invention

With reference to the accompanying drawings, the numeral 1 denotes as a whole a multiple wire machine for cutting of stone materials in accordance with the present invention.

The machine 1 comprises a fixed supporting structure 2 on which a frame 3 mobile in a vertical direction is slidably mounted.

A plurality of cutting devices 4 is mounted on the fame 3, the devices arranged parallel with one another so that they can simultaneously make a plurality of cuts on the same block 5 of material. Each cutting device 4 in turn comprises at least one first flywheel 6 and one second flywheel 7 positioned in the same plane and distanced from one another. The flywheels 6, 7 are rotatably mounted on the frame 3 and at least one of them is motor-driven, whilst the other is preferably idle. At least one cutting wire 8 is wound in a loop around the two flywheel 6, 7. In the embodiment illustrated, each cutting device 4 also comprise a plurality of smaller additional flywheels 9 in the same plane as the first and second flywheels 6, 7 and designed to guide the cutting wire 8 in the best possible way.

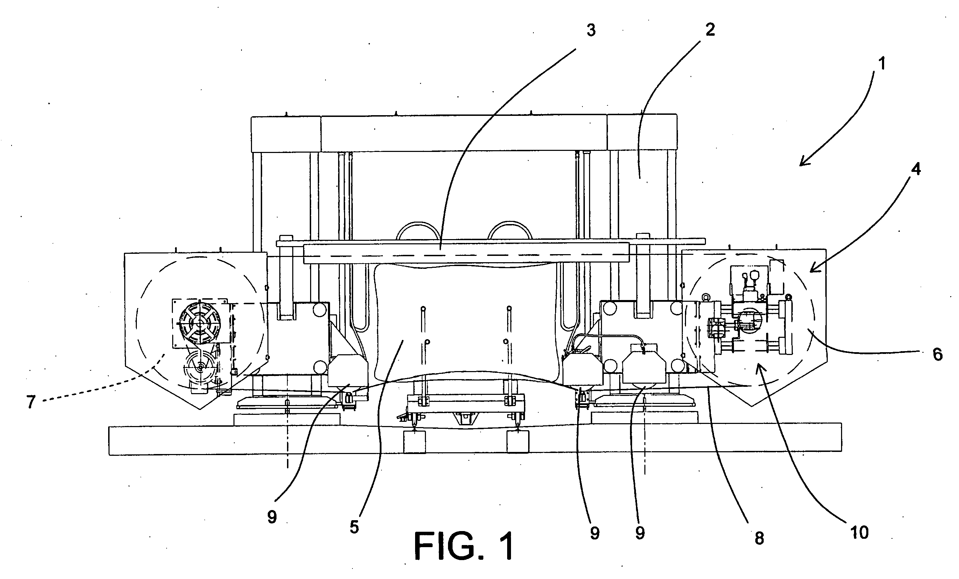

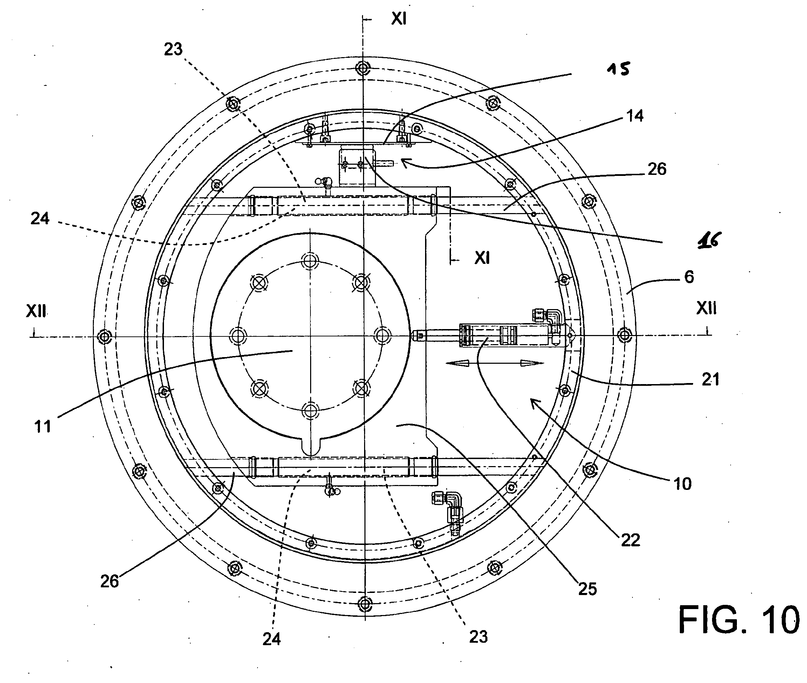

In each cutting device 4, tensioning means 10 operate on the first flywheel 6 (which is preferably idle) to keep the cutting wire 8 taut. For this purpose, the tensioning means 10 move the first flywheel 6 relative to its supporting shaft 11, between a minimum tensioning position 12 (first flywheel 6 moved to the left in Figures 1 and 10) and a maximum tensioning position 13 (first flywheel 6 moved to the right in Figures 1 and 10).

Since under operating conditions the tensioning applied to the wire by the tensioning means 10 is substantially constant, in this text the definition "minimum tensioning position" 12 indicates the condition in which the cutting wire 8 is subject to en external traction force such that it cannot compensate for the action of the tensioning means 10, so that the first flywheel 6 is pushed to the end of its stroke by the action of the tensioning means 10 whose traction action is not balanced by external stresses. Similarly, hereinafter "maximum tensioning position" 13 refers to the condition in which the cutting wire 8 is subjected to an external traction force greater than the force exerted by the tensioning means 10 so that the first flywheel 6 is pulled to the end of its stroke by the external traction force.

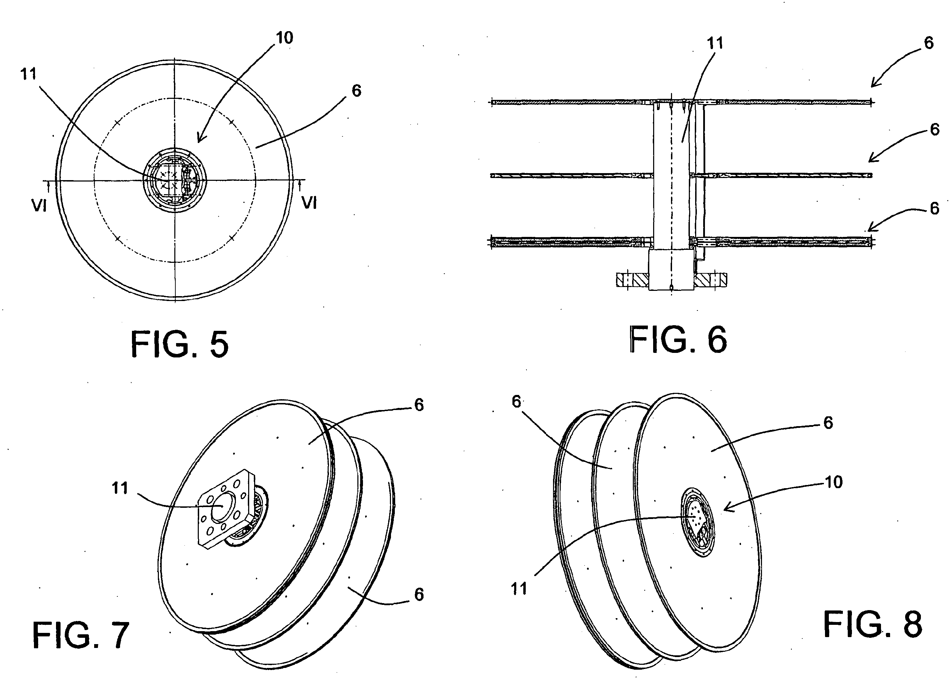

Advantageously, the supporting shaft 11 is shared by all of the first flywheels 6, which may, however, be moved independently of one another (for the sake of clarity, Figures 5 to 8 illustrate the supporting shaft 11 with only some of the first flywheels 6 mounted on it).

A control unit (not illustrated) is also set up to control operation of the machine 1 as a whole; in particular it is designed to control the movement of all of the machine 1 moving parts.

In accordance with the present invention, the machine 1 also comprises, for each first flywheel 6, at least one sensor 14 for detecting the position of the first flywheel 6 relative to the supporting shat 11.

The sensor 14 preferably detects and sends to the control unit the position of the first flywheel 6 relative to the minimum tensioning position 12 and/or the maximum tensioning position 13.

Advantageously, each sensor 14 comprises a fixed reference part 15 integral with the supporting shaft 11 and a mobile part 16 integral with the relative first flywheel 6. The fixed part 15 /mobile part 16 is also fitted with an electromagnetic detector able to detect the position of the mobile part 16 / fixed part 15 and so identify the position of the first flywheel 6.

The signal indicating the position of each first flywheel 6 is then sent to the control unit which, in accordance with the present invention, is programmed to vary the speed of movement of the frame 3 relative to the supporting structure 2, depending on the position of the first flywheels 6 detected by the relative sensors 14.

In the embodiment illustrated, since blocks of stone material are cut by a vertical descent of the frame 3 so that the cutting wires act in the block 5 from the top down, the frame 3 movement speed is normally called the descent speed. Therefore, in this case the descent speed is determined according to the position of the individual first flywheels 6.

Advantageously, the control unit is programmed to increase the frame 3 movement (descent) speed when it receives from the sensors the indication that at least one of the first flywheels 6 is at a distance from the minimum tensioning position 12 that is less than a predetermined first safety distance 17.

A first flywheel 6 may move towards the minimum tensioning position 12 when the tensioning of the relative-cutting wire 8 is insufficient. This is normally due to a wire descent speed that is too low relative to the hardness of the portion of material being cut.

As a result, increasing the descent speed under normal conditions successfully increases wire tensioning. The extent of the speed increase may be established on each occasion according to requirements. In particular, it may be varied either for discrete values or continuously. Moreover, it may be varied one or more times in succession as far as a predetermined limit.

Whatever the case, the control unit is also preferably programmed to interrupt machine 1 operation when at least one first flywheel 6 remains at a distance from the minimum tensioning position 12 that is less than the predetermined first safety distance 17, for a time longer than a predetermined threshold time, despite the fact that the frame 3 movement speed hats already been increased one or more times or as far as the predetermined limit.

The control unit is also preferably programmed to interrupt machine 1 operation when it receives from the sensors the indication that at least one of the first flywheels 6 is at a distance from the minimum tensioning position 12 that is less than a predetermined first threshold distance 18, where the first threshold distances is is less than the first safety distance 17.

By way of example, for an overall first flywheel 6 stroke of 65 mm, there may be a first safety distance 17 of 10 mm and a first threshold distance 18 of 4 mm. This means that if a first flywheel 6 is in a position less than 10 mm but more than 4 mm from the minimum tensioning position 12, the control unit increases the frame 3 descent speed as described above, but if the distance is less than 4 mm the control unit stops machine 1 operation.

Similarly, in accordance with the present invention, the control unit may be programmed to reduce the frame 3 movement speed when it receives from the sensors the indication that at least one of the first flywheels 6 is at a distance from the maximum tensioning position 13 that is less than a predetermined second safety distance 19.

In this case, a first flywheel 6 is forced to move towards the maximum tensioning position 13 when the tensioning of the relative cutting wire 8 is excessive. This is normally due to a wire descent speed that is too high relative to the hardness of the portion of material being cut, so that the cutting wire 8 feed speed in the material is less than the frame 3 movement speed.

As a result, by reducing the descent speed, under normal conditions the tensioning of the cutting wire 8 is successfully reduced. Again in this case the extent of the speed reduction may be established on each occasion according to requirements similarly to what is described relative to its increase. In particular, it may be varied either for discrete values or continuously. Moreover, it may be varied two or more times in succession as far as a predetermined limit.

Again, the control unit is also preferably programmed to interrupt machine 1 operation when at least one first flywheel 6 remains at a distance from the maximum tensioning position 13 that' is less than the predetermined second safety distance 19, for a time longer than a predetermined threshold time, despite the fact that the movement speed has already been reduced one or more times or as far as the predetermined limit.

Moreover, similarly to what is described above, the control unit is preferably programmed to interrupt machine 1 operation when it receives from the sensors the indication that at least one of the first flywheels 6 is at a distance from the maximum tensioning position 13 that is less than a predetermined second threshold distance 20, where the second threshold distance 20 is less than the second safety distance 19.

With reference to the example above (overall first flywheel 6 stroke of 65 mm), there may be a second safety distance 19 of 10 mm and a second threshold distance 20 of 4 mm. This means that if a first flywheel 6 is in a position less than 10 mm but more than 4 mm from the maximum tensioning position 13, the control unit reduces the frame 3 descent speed as described above, but if the distance is less than 4 mm the control unit stops machine 1 operation.

As regards the structure of the tensioning means 10, they comprise, for each first flywheel 6, a bearing 21, integral with the first flywheel 6, slidably mounted on the supporting shaft 11 according to a sliding direction lying in a plane perpendicular to the direction in which the supporting shaft 11 extend. A first actuator 22 (such as a hydraulic cylinder as illustrated in the accompanying drawings, a pneumatic cylinder or an electrical device) is mounted between the supporting shaft 11 and the bearing 21, to move the bearing 21 relative to the supporting shaft 11 in the plane perpendicular to the axis of rotation of the first flywheel 6. To guide the movement of the bearing 21 (an therefore of the corresponding first flywheel 6), the tensioning means 10 have, for each first flywheel 6, at least one guide 23 integral with the supporting shaft 11. In the accompanying drawings there are-two guides 23, parallel and each consisting of a through-hole 24 made in a supporting shaft 11 projection 25. A bar 26 shaped to match the hole and integral with the bearing 21 is slideably mounted in each through-hole 24.

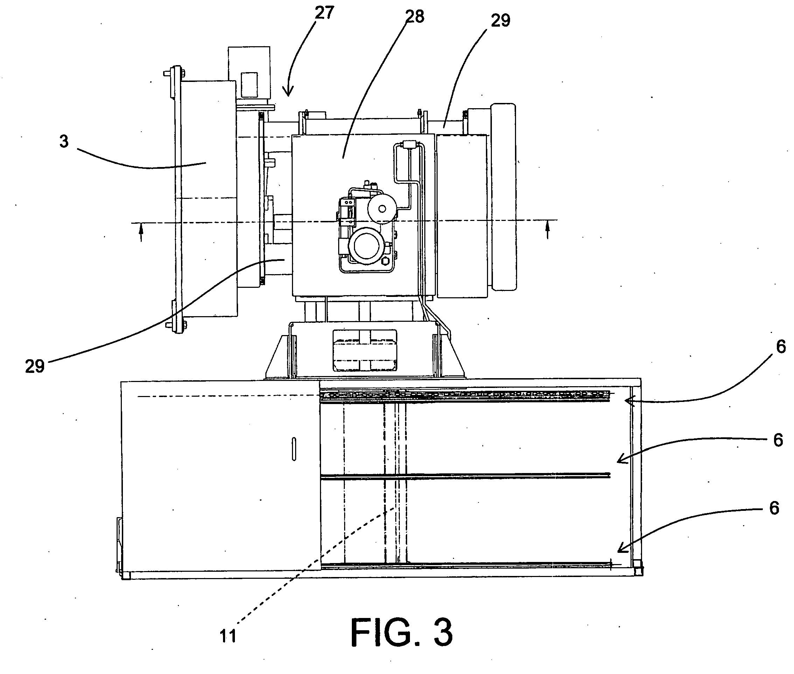

Advantageously, the multiple wire machine 1 for cutting according to the present invention also comprises means 27 for positioning the supporting shaft 11 designed to vary the distance of the supporting shaft 11 from the second flywheels 7, between a minimum distance position (movement to the left relative to the position in Figure 3) and a maximum distance position (movement to the right relative to the position in Figure 3).

In the embodiment illustrated, the positioning means 27 comprise a mobile element 28 slidably mounted on four parallel guide bars 29 integral with the frame 3, and which supports the supporting shaft 11 of the first flywheels 6. A second actuator 30, mounted between the frame 3 and the mobile element 28, causes mobile element 28 sliding relative to the frame 3. In other embodiments there may be one or more guide bars 29.

In the accompanying drawings, the second actuator 30 comprises a threaded bar 31 on which the mobile element 28 is mounted and means for driving the rotation of the threaded bar 31, which, advantageously, consist of an electric motor 32 connected to the threaded bar 31 either directly or via a transmission, for example using gears.

Activation of the positioning means 27 is also controlled by the control unit. In particular, the control unit is programmed to move the supporting shaft 11 by a predetermined distance after a command supplied by an operator, by activating the positioning means 27.

For this purpose the machine 1 also comprises an interface element (not illustrated) which can be activated by an operator and connected to the control unit to check and control its operation.

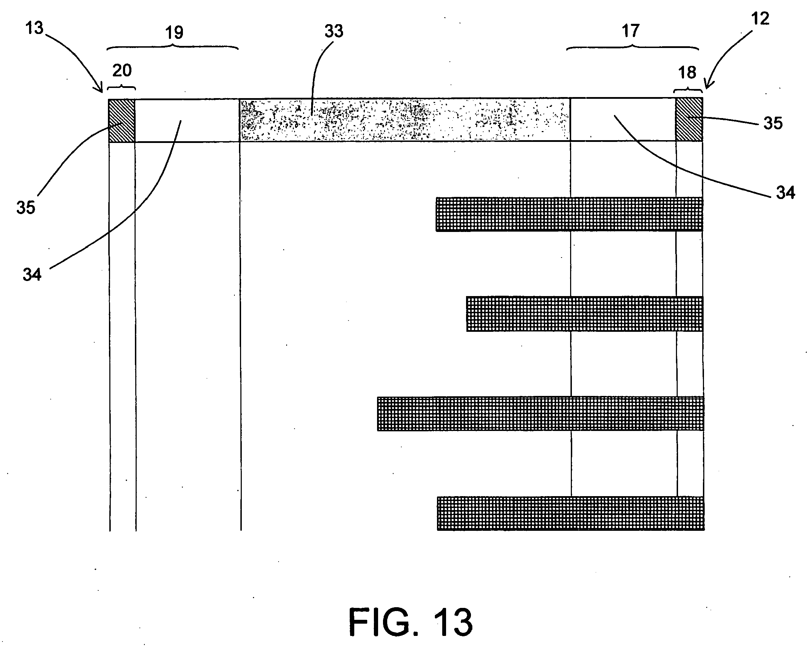

In the preferred embodiment, the interface element providers an indication of the position of each of the first flywheels 6 relative to the supporting shaft 11. An example of said indication is schematically illustrated in Figures 13 to 17 (see below).

The control unit may also be programmed to ignore one or more cutting devices 4 during a cutting operation. This is necessary when only some of the cutting devices 4 are used (for example, on a machine 1 with thirty cutting devices 4, only fifteen are used). However, there may be a check which stops machine 1 operation if tensioning is detected on one of the excluded cutting devices 4, since this would imply the unwanted presences of the cutting wire 8.

The control unit may also be programmed to count the hours for which each cutting wire 8 is used and to interrupt machine 1 operation when the hours for which each cutting wire 8 has been used exceed a predetermined time limit.

Many aspects of operation of the machine 1 disclosed are derived from the structural description above.

As indicated, Figures 13 to 17 illustrate several operating situations of four cutting devices 4 in the machine 1 disclosed.

In each figure, the upper bar graphically represents the five zones into which the stroke of each first flywheel 6 is divided. The right end corresponds to the minimum tensioning position 12 (hydraulic cylinder 22 fully extended), whilst the left end corresponds to the maximum tensioning position 13 (hydraulic cylinder 22 fully retracted).

Consequently, in the stroke of each first flywheel 6, a central normal operation zone 33 may be identified, two critical operation zones 34 adjacent to it, and two unacceptable operation limit zones 35.

Vertical lines indicate the first and the second safety distances 17, 19 and the first and the second threshold distances 18, 20.

The four rectangle below indicate the position of four first flywheels 6 relative to the minimum tensioning position 12.

Figure 13 illustrates operation up to speed, where all four cutting devices 4 are in the normal operation 33 zone.

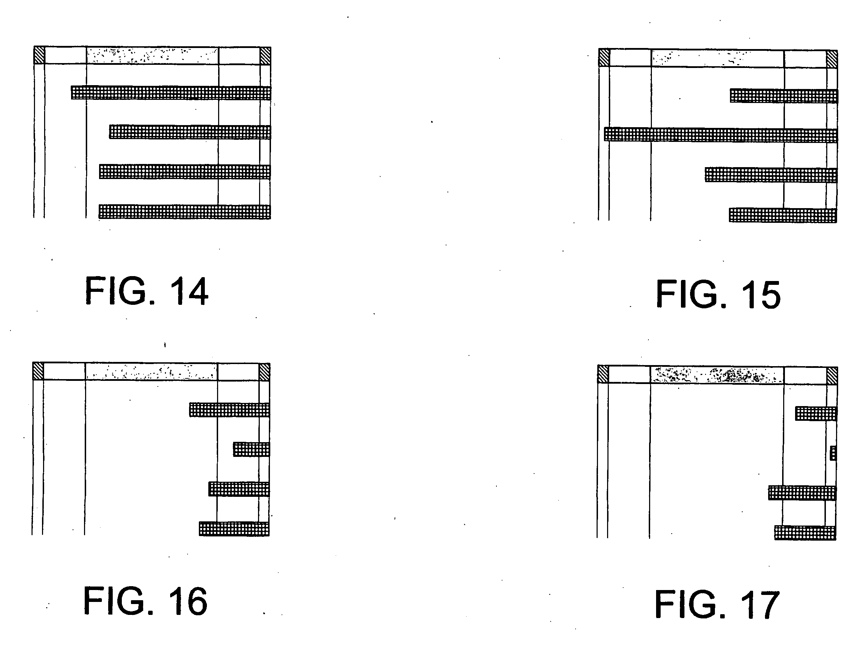

Figure 14 illustrate the case in which a cutting device 4 is in the critical operation zone 34 close to the maximum tensioning position 13. The other three devices 4 are also close to said zone. In this case, the control unit intervenes, reducing the frame 3 movement (descent) speed. Under normal conditions this causes all of the flywheels to move towards the minimum tensioning position 12 and to return within the normal operation zone 33.

Figure 16 illustrates the similar but opposite case in which a cutting device 4 is in the critical operation zone 34 close to the minimum tensioning position 12. In this case the control unit is programmed to increase the frame 3 movement (descent) speed.

Figures 15 and 17 illustrates the case of a cutting device 4 in the unacceptable operation zone 35 (Figure 17 also shows a first flywheel 6 in the critical operation zone 34). In this case the control unit is programmed to interrupt machine 1 operation. The operator is responsible for identifying the causes which resulted in the cutting device 4 being in the unacceptable operation zone 35.

For example, in the case in Figure 15, this may be due to excessive wear of the cutting wire 8 diamond coating which causes a considerable sweepforward. If this is the case, the operator substitutes the cutting wire 8.

In the case in Figure 17, it may be enough to move the supporting shaft 11 towards the maximum distance position to return all of the cutting devices 4 to the normal operation position 33.

When a new cutting operation is started, the control unit is preferably programmed to perform several operating steps which guarantee correct machine 1 operation.

First, the control unit uses the positioning means 27 to move the supporting shaft 11 to the minimum distance position.

Then it applies a predetermined tensioning force to all of the first flywheels 6 using the tensioning means 10. In the embodiment illustrate this involves feeding all of the first actuators 22 with oil or another fluid at the same pressure. Since there are no external stresses, all of the first flywheels 6 move to the minimum tensioning position 12. At this point, the control unit preferably adopts the Position of each first flywheel 6 as the reference position for subsequent movement.

Then, the control unit activates the positioning means 27 to move the supporting shaft 11 towards the maximum distance position (to the right in Figure 3). Once each cutting wire 8 is fully extended, the action of the positioning means 27 overcomes the tensioning force applied by the relative first actuator 22, causing the first flywheel 6 to gradually move from the minimum tensioning position 12 towards the maximum tensioning position 13. This movement is controlled by the control unit using the sensors 14.

The control unit is programmed to stop operation of the positioning means 27 when all of the first flywheels 6 are in the normal operation zone 33. If necessary, before interrupting operation of the positioning means 27, the control unit waits until all of the first flywheels 6 are a predetermined distance from the critical operation zone 34 close to the minimum tensioning position 12.

The present invention brings important advantages.

Firstly, the multiple wire machine for cutting stones disclosed can prevent excessive tensioning of the cutting wires under any operating condition.

In this way it can prevent the cutting wires from breaking due to excessive tensioning, even if they are excessively worn.

Moreover, the machine disclosed prevents excessive slackening of the cutting wires and therefore guarantees a precise and smooth cut under any operating condition.

It should also be noticed that the present invention is relatively easy to produce and even the cost linked to implementation of the invention is not very high.

The invention described may be modified and adapted without departing from the scope of the invention as defined by the claims.

## Claims

1. A multiple wire machine for cutting stone materials comprising:
a fixed supporting structure (2);
a frame (3) slidably mounted on the supporting structure (2);
a plurality of cutting devices (4) mounted parallel with one another on the frame (3), each cutting device (4) in turn comprising:
at least one first flywheel (6) and one second flywheel (7) in the same plane, distanced from one another and rotatably mounted on the frame (3), at least one of the flywheels being motor-driven;
at least one cutting wire (8) wound in a loop around the flywheels;
tensioning means (10) operating on the first flywheel (6) to keep the cutting wire (8) taut, the tensioning means (10) moving the first flywheel (6) relative to its supporting shaft (11), between a minimum tensioning position (12) and a maximum tensioning position (13);
there also being at least one machine (1) operation control unit;
the machine being **characterised in that** it also comprises, for each first flywheel (6), at least one sensor (14) for detecting the position of the first flywheel (6) relative to the supporting shaft (11), and **in that** the control unit is programmed to vary the speed of movement of the frame (3) relative to the supporting structure (2), depending on the position of the first flywheels (6) detected by the relative sensors (14).

2. The multiple wire machine according to claim 1, **characterised in that** the control unit is programmed to increase the frame (3) movement speed when it receives from the sensors (14) the indication that at least one of the first flywheels (6) is at a distance from the minimum tensioning position (12) that is less than a predetermined first safety distance (17).

3. The multiple wire machine according to claim 2, **characterised in that** the control unit is programmed to interrupt machine (1) operation when at least one first flywheel (6) remains at a distance from the minimum tensioning position (12) that is less than the predetermined first safety distance (17) for a time longer than a predetermined threshold time.

4. The multiple wire machine according to claim 2 or 3, **characterised in that** the control unit is programmed to interrupt machine (1) operation when it receives from the sensors (14) the indication that at least one of the first flywheels (6) is at a distance from the minimum tensioning position (12) that is less than a predetermined first threshold distance (18), the first threshold distance (18) being less than the first safety distance (17).

5. The multiple wire machine according to any of the foregoing claims, **characterised in that** the control unit is programmed to reduce the frame (3) movement speed when it receives from the sensors (14) the indication that at least one of the first flywheel (6) is at a distance from the maximum tensioning position (13) that is less than a predetermined second safety distance (19).

6. The multiple wire machine according to claim 5, **characterised in that** the control unit is programmed to interrupt machine (1) operation when at least one first flywheel (6) remains at a distance from the maximum tensioning position (13) that is less than the predetermined second safety distance (19) for a time longer than a predetermined threshold time.

7. The multiple wire machine according to claim 1 or 2, **characterised in that** the control unit is programmed to interrupt machine (1) operation when it receives from the sensors (14) the indication that at least one of the first flywheels (6) is at a distance from the maximum tensioning position (13) that is less than a predetermined second threshold distance (20), the second threshold distance (20) being less than the second safety distance (19).

8. The multiple wire machine according to any of the foregoing claims, **characterised in that** the tensioning means (10) comprise, for each first flywheel (6), a bearing (21) integral with the first flywheel (6) and slidably mounted on the supporting shaft (11) and at least one first actuator (22) mounted between the supporting shaft (11) and the bearing (21) for moving the bearing (21) relative to the supporting shaft (11) in a plane perpendicular to the axis of rotation of the first flywheel (6).

9. The multiple wire machine according to claim 8, **characterised in that** the first actuator (22) is a hydraulic cylinder, a pneumatic cylinder or an electrical device.

10. The multiple wire machine according to claim 8 or 9, **characterised in that,** for each first flywheel (6) the tensioning means (.10) have at least one guide (23) integral with the supporting shaft (11).

11. The multiple wire machine according to claim 10, **characterised in that**, for each first flywheel (6) the tensioning means (10) have two parallel guides integral with the supporting shaft (11).

12. The multiple wire machine according to claim 11, **characterised in that** the guides each consist of a through-hole (24) in which a bar (26) shaped to match the through-hole and integral with the bearing (21) is slidably mounted.

13. The multiple wire machine according to any of the foregoing claims, **characterised in that** each sensor (14) comprises a fixed reference part (15) integral with the supporting shaft (11) and a mobile part (16) integral with the relative first flywheel (6).

14. The multiple wire machine according to any of the foregoing claims, **characterised in that** it also comprises means (27) for positioning the supporting shat (11) designed to vary the distance of the supporting shaft (11) from the second flywheels between a minimum distance position and a maximum distance position.

15. The multiple wire machine according to claim 14, **characterised in that** the positioning means (27) comprise a mobile element (28) slidably attached to the frame (3), the supporting shaft (11) being mounted on the mobile element (28), and at least a second actuator (30) mounted between the frame (3) and the mobile element (28), causing mobile element sliding relative to the frame (3).

16. The multiple wire machine according to claim 15, **characterised in that** the second actuator (30) comprises a threaded bar (31) on which the mobile element (28) is mounted and means for driving the rotation of the threaded bar (31).

17. The multiple wire machine according to claim 15 or 16, **characterised in that** the positioning means (27) also comprise two parallel guide bars (29) on which the mobile element (28) is slidably mounted.

18. The multiple wire machine according to any of the claim from 14 to 17, **characterised in that** the control unit is programmed to move the supporting shaft (11) by a predetermined distance after a command supplied by an operator.

19. The multiple wire machine according to any of the claims from 14 to 18, **characterised in that** the control unit is programmed to perform the following operating steps before the start of each cutting operation:
move the supporting shaft (11) to said minimum distance position;
apply a predetermined tensioning force to all of the first flywheels (6) using the tensioning means (10), moving the first flywheels to the minimum tensioning position (12);
move the supporting shaft (11) towards the maximum distance position, overcoming the tensioning force applied until the position of all of the first flywheels (6) relative to the supporting shaft (11), detected by the relative sensors (14), returns within a predetermined zone.

20. The multiple wire machine according to any of the foregoing claims, also comprising an interface element which can be activated by an operator and is connected to the control unit.

21. The multiple wire machine according to claim 20, **characterised in that** the interface element provides an indication of the position of each flywheel relative to the supporting shaft (11).

22. The multiple wire machine according to any of the foregoing claims, **characterised in that** the control unit can be programmed to ignore one or more cutting devices (4) during a cutting operation.

23. The multiple wire machine according to any of the foregoing claims, **characterised in that** the control unit is programmed to count the hours for which each cutting wire (8) is used and to interrupt machine (1) operation when the hours for which each cutting wire (8) has been used exceed a predetermined time limit.

24. The multiple wire machine according to any of the foregoing claims, **characterised in that** the supporting shaft (11) is shared by all of the first flywheels (6).

## Patentansprüche

1. Maschine mit mehreren Drähten zum Schneiden von Steinmaterialien, enthaltend:
- eine feststehende Trägerstruktur (2);
- einen Rahmen (3), der gleitbar an der Trägerstruktur (2) montiert ist;
- eine Anzahl von Schneidvorrichtungen (4), montiert parallel zueinander an dem Rahmen (3), wobei jede Schneidvorrichtung (4) wiederum enthält:
- wenigstens ein erstes Schwungrad (6) und ein zweites Schwungrad (7) auf derselben Ebene, voneinander abstehend und drehbar an dem Rahmen (3) montiert, wobei wenigstens eins der Schwungräder angetrieben ist;
- wenigstens einen Schneiddraht (8), der ringförmig geschlossen um die Schwungräder gewunden ist;
- Spannmittel (10), die an dem ersten Schwungrad (6) arbeiten, um den Schneiddraht (8) gespannt zu halten, wobei die Spannmittel (10) das erste Schwungrad (6) im Verhältnis zu dessen Trägerwelle (11) zwischen einer minimalen Spannposition (12) und einer maximalen Spannposition (13) bewegen;
wobei ebenfalls wenigstens eine Steuereinheit für die Maschine (1) vorgesehen ist;
und wobei die Maschine **dadurch gekennzeichnet ist, dass** sie ebenfalls für jedes erste Schwungrad (6) wenigstens einen Fühler (14) zum Erfassen der Position des ersten Schwungrades (6) im Verhältnis zu der Trägerwelle (11) enthält, **und dadurch,** dass die Steuereinheit programmiert ist zum Verändern Geschwindigkeit der Bewegung des Rahmens (3) im Verhältnis zu der Trägerstruktur (2), abhängig von der Position der ersten Schwungräder (6), erfasst durch die entsprechenden Fühler (14).

2. Maschine mit mehreren Drähten nach Patentanspruch 1,
**dadurch gekennzeichnet, dass** die Steuereinheit programmiert ist, um die Bewegungsgeschwindigkeit des Rahmens (3) zu erhöhen, wenn sie von den Fühlern (14) den Hinweis erhält, dass wenigstens eins der ersten Schwungräder (6) sich in einem Abstand von der minimalen Spannposition (12) befindet, der geringer ist als ein vorgegebener erster Sicherheitsabstand (17).

3. Maschine mit mehreren Drähten nach Patentanspruch 2, **dadurch gekennzeichnet, dass** die Steuereinheit programmiert ist, um den Betrieb der Maschine (1) zu unterbrechen, wenn wenigstens ein erstes Schwungrad (6) in einem Abstand von der minimalen Spannposition (12) bleibt, der geringer ist als der vorgegebene erste Sicherheitsabstand (17), und zwar für eine Dauer, die länger ist als eine vorgegebene Schwellenzeit.

4. Maschine mit mehreren Drähten nach Patentanspruch 2 oder 3, **dadurch gekennzeichnet, dass** die Steuereinheit programmiert ist, um den Betrieb der Maschine (1) zu unterbrechen, wenn sie von den Fühlern (14) den Hinweis erhält, dass wenigstens eins der ersten Schwungräder (6) sich in einem Abstand von der minimalen Spannposition (12) befindet, der geringer ist als ein vorgegebener erster Schwellenabstand (18), wobei der erste Schwellenabstand (18) geringer ist als der erste Sicherheitsabstand (17).

5. Maschine mit mehreren Drähten nach einem jeden der vorstehenden Patentansprüche, **dadurch gekennzeichnet, dass** die Steuereinheit programmiert ist, um die Bewegungsgeschwindigkeit des Rahmens (3) zu reduzieren, wenn sie von den Fühlern (14) den Hinweis erhält, dass wenigstens eins der ersten Schwungräder (6) sich in einem Abstand von der maximalen Spannposition (13) befindet, der geringer ist als ein vorgegebener zweiter Sicherheitsabstand (19).

6. Maschine mit mehreren Drähten nach Patentanspruch 5, **dadurch gekennzeichnet, dass** die Steuereinheit programmiert ist, um den Betrieb der Maschine (1) zu unterbrechen, wenn wenigstens ein erstes Schwungrad (6) in einem Abstand von der maximalen Spannposition (13) bleibt, der geringer ist als der vorgegebene zweite Sicherheitsabstand (19), und zwar für eine Dauer, die länger ist als eine vorgegebene Schwellenzeit.

7. Maschine mit mehreren Drähten nach Patentanspruch 1 oder 2, **dadurch gekennzeichnet, dass** die Steuereinheit programmiert ist, um den Betrieb der Maschine (1) zu unterbrechen, wenn sie von den Fühlern (14) den Hinweis erhält, dass wenigstens eins der ersten Schwungräder (6) sich in einem Abstand von der maximalen Spannposition (13) befindet, der geringer ist als ein vorgegebener zweiter Schwellenabstand (20), wobei der zweite Schwellenabstand (20) geringer ist als der zweite Sicherheitsabstand (17).

8. Maschine mit mehreren Drähten nach einem jeden der vorstehenden Patentansprüche, **dadurch gekennzeichnet, dass** die Spannmittel (10) für jedes erste Schwungrad (6) ein fest mit dem ersten Schwungrad (6) verbundenes und gleitbar an der Trägerwelle (11) montiertes Lager (21) enthalten, sowie wenigstens ein erstes Stellglied (22), montiert zwischen der Trägerwelle (11) und dem Lager (21), um das Lager (21) im Verhältnis zu der Trägerwelle (11) in einer Ebene lotrecht zu der Drehachse des ersten Schwungrades (6) zu bewegen.

9. Maschine mit mehreren Drähten nach Patentanspruch 8, **dadurch gekennzeichnet, dass** das erste Stellglied (22) ein Hydraulikzylinder, ein Druckluftzylinder oder eine elektrische Vorrichtung ist.

10. Maschine mit mehreren Drähten nach Patentanspruch 8 oder 9, **dadurch gekennzeichnet, dass** für jedes erste Schwungrad (6) die Spannmittel (10) wenigstens eine Führung (23) integral mit der Trägerwelle (11) haben.

11. Maschine mit mehreren Drähten nach Patentanspruch 10, **dadurch gekennzeichnet, dass** für jedes erste Schwungrad (6) die Spannmittel (10) zwei parallele Führungen integral mit der Trägerwelle (11) haben.

12. maschine mit mehreren Drähten nach Patentanspruch 11, **dadurch gekennzeichnet, dass** die Führungen jeweils aus einer durchgehenden Bohrung (24) bestehen, in welcher eine passrecht zu der durchgehenden Bohrung (24) geformte und fest mit dem Lager (21) verbundene Stange gleitbar montiert ist.

13. Maschine mit mehreren Drähten nach einem jeden der vorstehenden Patentansprüche, **dadurch gekennzeichnet, dass** jeder Fühler (14) einen feststehenden Bezugsteil (15) integral mit der Trägerwelle (11) enthält, sowie einen beweglichen Teil (16), integral mit dem entsprechenden ersten Schwungrad (6).

14. Maschine mit mehreren Drähten nach einem jedem der vorstehenden Patentansprüche, **dadurch gekennzeichnet, dass** sie ebenfalls Mittel (27) zum Positionieren der Trägerwelle (11) enthält, dazu bestimmt, den Abstand der Trägerwelle (11) von den zweiten Schwungrädern zu verändern, und zwar zwischen einer minimalen Abstandsposition und einer maximalen Abstandsposition.

15. Maschine mit mehreren Drähten nach Patentanspruch 14, **dadurch gekennzeichnet, dass** die Positioniermittel (27) ein bewegliches Element (28) enthalten, gleitbar angebracht an dem Rahmen (3), wobei die Trägerwelle (11) an dem beweglichen Element (28) montiert ist, und wenigstens ein zweites Stellglied (30), montiert zwischen dem Rahmen (3) und dem beweglichen Element (28), wodurch das Gleiten des beweglichen Elementes im Verhältnis zu dem Rahmen (3) bewirkt wird.

16. Maschine mit mehreren Drähten nach Patentanspruch 15, **dadurch gekennzeichnet, dass** das zweite Stellglied (30) eine Gewindestange (31) enthält, an welcher das bewegliche Element (28) montiert ist, und Mittel für den Drehantrieb der Gewindestange (31).

17. Maschine mit mehreren Drähten nach Patentanspruch 15 oder 16, **dadurch gekennzeichnet, dass** die Positioniermittel (27) ebenfalls zwei parallele Führungsstangen (29) enthalten, an welchen das bewegliche Element (28) gleitbar montiert ist.

18. Maschine mit mehreren Drähten nach einem jeden der Patentansprüche von 14 bis 17, **dadurch gekennzeichnet, dass** die Steuereinheit programmiert ist, um die Trägerwelle (11) nach einem durch einen Bediener gegebenen Befehl um einen vorgegebenen Abstand zu verschieben.

19. Maschine mit mehreren Drähten nach einem jeden der Patentansprüche von 14 bis 18, **dadurch gekennzeichnet, dass** die Steuereinheit programmiert ist, um vor dem Beginn eines jeden Schneidvorgangs die folgenden Betriebsphasen auszuführen:
- Verschieben der Trägerwelle (11) in die genannte minimale Abstandsposition;
- Anbringen einer vorgegebenen Spannkraft an allen ersten Schwungrädern (6) unter Benutzung der Spannmittel (10), wobei die ersten Schwungräder in die minimale Spannposition (12) gebracht werden;
- Verschieben der Trägerwelle (11) in Richtung der maximalen Abstandsposition, wobei die angebrachte Spannkraft überwunden wird, bis die Position aller ersten Schwungräder (6) im Verhältnis zu der Trägerwelle (11), erfasst durch die entsprechenden Fühler (14), wieder innerhalb eines vorgegebenen Bereiches liegt.

20. Maschine mit mehreren Drähten nach einem jeden der vorstehenden Patentansprüche, ebenfalls enthaltend ein Schnittstellenelement, welches durch einen Bediener aktiviert werden kann und an die Steuereinheit angeschlossen ist.

21. Maschine mit mehreren Drähten nach Patentanspruch 20, **dadurch gekennzeichnet, dass** das Schnittstellenelement eine Anzeige der Position eines jeden Schwungrades im Verhältnis zu der Trägerwelle (11) liefert.

22. Maschine mit mehreren Drähten nach einem jeden der vorstehenden Patentansprüche, **dadurch gekennzeichnet, dass** die Steuereinheit programmiert werden kann, um eine oder mehrere Schneidvorrichtungen (4) während eines Schneidvorgangs zu übergehen.

23. Maschine mit mehreren Drähten nach einem jeden der vorstehenden Patentansprüche, **dadurch gekennzeichnet, dass** die Steuereinheit programmiert ist, um die Stunden zu zählen, während welcher jeder Schneiddraht (8) benutzt wird, und um den Betrieb der Maschine (1) zu unterbrechen, wenn die Stunden, während welcher jeder Schneiddraht (8) benutzt worden ist, eine vorgegebene Zeitbegrenzung überschritten haben.

24. Maschine mit mehreren Drähten nach einem jeden der vorstehenden Patentansprüche, **dadurch gekennzeichnet, dass** die Trägerwelle (11) für alle ersten Schwungräder (6) gemeinsam ist.

## Revendications

1. Une machine à fils multiples pour couper des matériaux en pierre comprenant :
une structure de support (2) fixe ;
un châssis (3) monté de façon coulissante sur la structure de support (2) ;
une pluralité de dispositifs de coupe (4) montés parallèlement les uns aux autres sur le châssis (3), chaque dispositif de coupe (4) comprenant à son touer :
au moins un premier volant (6) et un deuxième volant (7) situés dans le même plan, espacés l'un de l'autre et montés de façon rotative sur le châssis (3), au moins un des volants étant motorisé ;
au moins un fil de coupe (8) enroulé en boucle autour des volants ;
des moyens de tension (10) agissant sur le premier volant (6) pour maintenir tendu le fil de coupe (8), lesdits moyens de tension (10) déplaçant le premier volant (6) par rapport à son arbre de support (11), entre une position de tension minimum (12) et une position de tension maximum (13) ;
au moins une unité de contrôle du fonctionnement de la machine (1) étant également prévue ;
la machine étant **caractérisée en ce qu'**elle comprend aussi, pour chaque premier volant (6), au moins un capteur (14) destiné à détecter la position du premier volant (6) par rapport à l'arbre de support (11), et **en ce que** l'unité de contrôle est programmée pour faire varier la vitesse de déplacement du châssis (3) par rapport à la structure de support (2) en fonction de la position des premiers volants (6) détectée par les capteurs (14) respectifs.

2. La machine à fils multiples selon la revendication 1, **caractérisée en ce que** l'unité de contrôle est programmée pour augmenter la vitesse de déplacement du châssis (3) quand elle reçoit, en provenance des capteurs (14), l'indication qu'au moins un des premiers volants (6) est à une distance de la position de tension minimum (12) qui est inférieure à une première distance de sécurité (17) prédéfinie.

3. La machine à fils multiples selon la revendication 2, **caractérisée en ce que** l'unité de contrôle est programmée pour interrompre le fonctionnement de la machine (1) quand au moins un premier volant (6) reste à une distance de la position de tension minimum (12) qui est inférieure à la première distance de sécurité (17) prédéfinie pendant une durée supérieure à une durée de seuil prédéfinie.

4. La machine à fils multiples selon la revendication 2 ou 3, **caractérisée en ce que** l'unité de contrôle est programmée pour interrompre le fonctionnement de la machine (1) quand elle reçoit, en provenance des capteurs (14), l'indication qu'au moins un des premiers volants (6) est à une distance de la position de tension minimum (12) qui est inférieure à une première distance seuil (18) prédéfinie, ladite première distance seuil (18) étant inférieure à la première distance de sécurité (17).

5. La machine à fils multiples selon l'une quelconque des revendications précédentes, **caractérisée en ce que** l'unité de contrôle est programmée pour réduire la vitesse de déplacement du châssis (3) quand elle reçoit, en provenance des capteurs (14), l'indication qu'au moins un des premiers volants (6) est à une distance de la position de tension maximum (13) qui est inférieure à une deuxième distance de sécurité (19) prédéfinie.

6. La machine à fils multiples selon la revendication 5, **caractérisée en ce que** l'unité de contrôle est programmée pour interrompre le fonctionnement de la machine (1) quand au moins un premier volant (6) reste à une distance de la position de tension maximum (13) qui est inférieure à la deuxième distance de sécurité (19) prédéfinie pendant une durée supérieure à une durée de seuil prédéfinie.

7. La machine à fils multiples selon la revendication 1 ou 2, **caractérisée en ce que** l'unité de contrôle est programmée pour interrompre le fonctionnement de la machine (1) quand elle reçoit, en provenance des capteurs (14), l'indication qu'au moins un des premiers volants (6) est à une distance de la position de tension maximum (13) qui est inférieure à une deuxième distance seuil (20) prédéfinie, ladite deuxième distance seuil (20) étant inférieure à la deuxième distance de sécurité (19).

8. La machine à fils multiples selon l'une quelconque des revendications précédentes, **caractérisée en ce que** les moyens de tension (10) comprennent, pour chaque premier volant (6), un palier (21) incorporé au premier volant (6) et monté de façon coulissante sur l'arbre de support (11) et au moins un premier actionneur (22) monté entre l'arbre de support (11) et le palier (21) pour déplacer ledit palier (21) par rapport audit arbre de support (11) dans un plan perpendiculaire à l'axe de rotation du premier volant (6).

9. La machine à fils multiples selon la revendication 8, **caractérisée en ce que** le premier actionneur (22) est un cylindre hydraulique, un cylindre pneumatique ou un dispositif électrique.

10. La machine à fils multiples selon la revendication 8 ou 9, **caractérisée en ce que** les moyens de tension (10) comprennent, pour chaque premier volant (6), au moins un guide (23) incorporé à l'arbre de support (11).

11. La machine à fils multiples selon la revendication 10, **caractérisée en ce que** les moyens de tension (10) comprennent, pour chaque premier volant (6), deux guides parallèles incorporés à l'arbre de support (11).

12. La machine à fils multiples selon la revendication 11, **caractérisée en ce que** les guides consistent chacun en un trou débouchant (24) dans lequel une barre (26), conformée pour correspondre audit trou débouchant et incorporée au palier (21), est montée de façon coulissante.

13. La machine à fils multiples selon l'une quelconque des revendications précédentes, **caractérisée en ce que** chaque capteur (14) comprend une partie de référence fixe (15) incorporée à l'arbre de support (11) et une partie mobile (16) incorporée au premier volant (6) respectif.

14. La machine à fils multiples selon l'une quelconque des revendications précédentes, **caractérisée en ce qu'**elle comprend aussi des moyens (27) de positionnement de l'arbre de support (11) qui sont destinés à faire varier la distance dudit arbre de support (11) par rapport aux deuxièmes volants entre une position de distance minimum et une position de distance maximum.

15. La machine à fils multiples selon la revendication 14, **caractérisée en ce que** les moyens de positionnement (27) comprennent un élément mobile (28) associé de façon coulissante au châssis (3), l'arbre de support (11) étant monté sur ledit élément mobile (28), et au moins un deuxième actionneur (30) monté entre le châssis (3) et l'élément mobile (28) et servant à faire coulisser ledit élément mobile par rapport au châssis (3).

16. La machine à fils multiples selon la revendication 15, **caractérisée en ce que** le deuxième actionneur (30) comprend une barre filetée (31) sur laquelle l'élément mobile (28) est monté, et des moyens pour la mise en rotation de ladite barre filetée (31).

17. La machine à fils multiples selon la revendication 15 ou 16, **caractérisée en ce que** les moyens de positionnement (27) comprennent aussi deux barres de guidage (29), parallèles, sur lesquelles l'élément mobile (28) est monté de façon coulissante.

18. La machine à fils multiples selon l'une quelconque des revendications de 14 à 17, **caractérisée en ce que** l'unité de contrôle est programmée pour déplacer l'arbre de support (11) d'une distance prédéfinie sur réception d'une commande fournie par un opérateur.

19. La machine à fils multiples selon l'une quelconque des revendications de 14 à 18, **caractérisée en ce que** l'unité de contrôle est programmée pour exécuter les phases opérationnelles suivantes avant le démarrage de chaque opération de coupe :
déplacer l'arbre de support (11) dans ladite position de distance minimum ;
appliquer une force de tension prédéfinie sur tous les premiers volants (6) par l'intermédiaire des moyens de tension (10), en déplaçant lesdits premiers volants dans la position de tension minimum (12) ;
déplacer l'arbre de support (11) vers la position de distance maximum en s'opposant à la force de tension appliquée jusqu'à ce que la position de tous les premiers volants (6) par rapport à l'arbre de support (11), détectée par les capteurs (14) respectifs, retourne dans une zone prédéfinie.

20. La machine à fils multiples selon l'une quelconque des revendications précédentes, **caractérisée en ce qu'**elle comprend aussi un élément d'interface qui peut être activé par un opérateur et est relié à l'unité de contrôle.

21. La machine à fils multiples selon la revendication 20, **caractérisée en ce que** l'élément d'interface fournit une indication sur la position de chaque volant par rapport à l'arbre de support (11).

22. La machine à fils multiples selon l'une quelconque des revendications précédentes, **caractérisée en ce que** l'unité de contrôle peut être programmée pour ignorer un ou plusieurs dispositifs de coupe (4) pendant une opération de coupe.

23. La machine à fils multiples selon l'une quelconque des revendications précédentes, **caractérisée en ce que** l'unité de contrôle est programmée pour compter les heures d'utilisation de chaque fil de coupe (8) et pour interrompre le fonctionnement de la machine (1) quand les heures d'utilisation de chaque fil de coupe (8) dépasse une limite de temps prédéfinie.

24. La machine à fils multiples selon l'une quelconque des revendications précédentes, **caractérisée en ce que** l'arbre de support (11) est commun à tous les premiers volants (6).
